Europäisches Patentamt

European Patent Office

Office européen des brevets

(11) Veröffentlichungsnummer: **0 023 037**
**A1**

(12) **EUROPÄISCHE PATENTANMELDUNG**

(21) Anmeldenummer: 80104197.1

(51) Int. Cl.³: **H 02 K 23/16**

(22) Anmeldetag: 17.07.80

(30) Priorität: 24.07.79 DE 2930037

(43) Veröffentlichungstag der Anmeldung:
28.01.81 Patentblatt 81/4

(84) Benannte Vertragsstaaten:
AT CH DE FR GB IT LI SE

(71) Anmelder: SIEMENS AKTIENGESELLSCHAFT Berlin
und München
Postfach 22 02 61
D-8000 München 22(DE)

(72) Erfinder: Landgraf, Hermann
Donaustrasse 1
D-6148 Heppenheim(DE)

(54) Gleichstrom-Kleinstmotor, insbesondere für den Antrieb zahnärztlicher Werkzeuge.

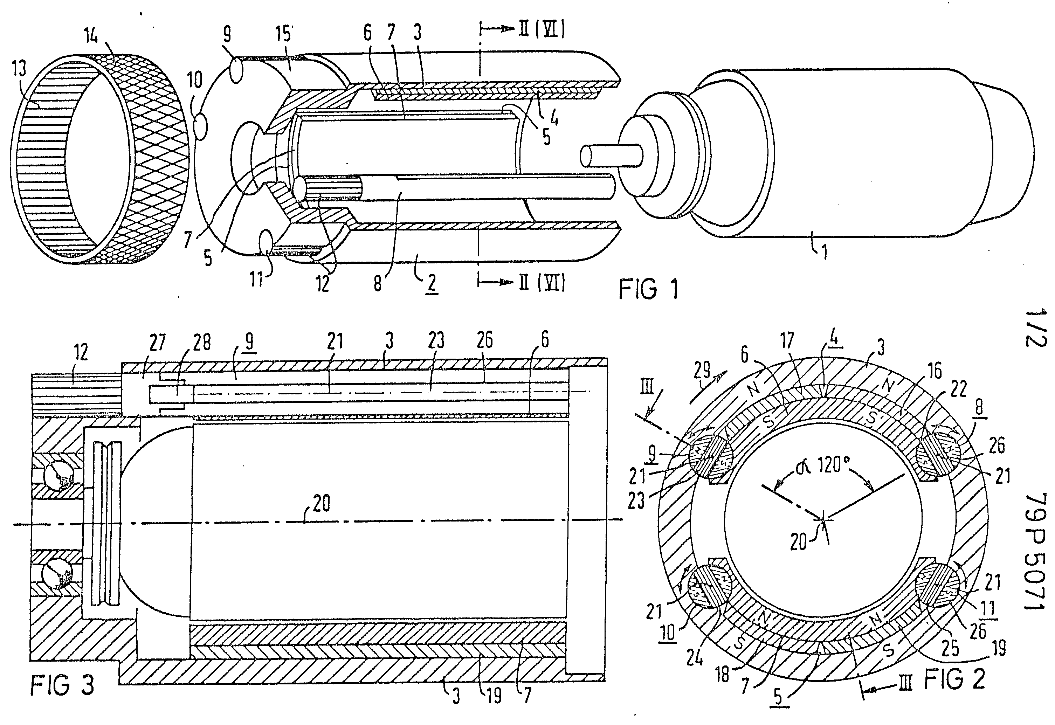

(57) Die Erfindung bezieht sich auf einen Gleichstrom-Kleinstmotor mit einem permanentmagnetischen Stator. Um den Drehzahlbereich des Motors in bestimmten Grenzen ändern zu können, wird erfindungsgemäß vorgeschlagen, daß der Stator (4, 5, 22 - 25) wenigstens einen um eine im wesentlichen parallel zur Motorachse (20) verlaufende Achse (21) drehbar gelagerten Stab (22 - 25) aus permanentmagnetischem Material enthält, ferner, daß Verstellmittel (14, 15) zur Verdrehung des Stabes (22 - 25) relativ zu den unmittelbar benachbarten Statorteilen (16 - 19) vorhanden sind. Durch Drehen des Stabes wird ein Gegenfeld aufgebaut, welches den Gesamtfluß schwächt und wodurch sich die Drehzahl verändern läßt. Die Anordnung dient insbesondere dazu, den Drehzahlbereich eines Gleichstrom-Kleinstmotors für den Antrieb zahnärztlicher Werkzeuge ändern zu können (Fig. 1).

FIG 2

EP 0 023 037 A1

SIEMENS AKTIENGESELLSCHAFT          Unser Zeichen
Berlin und München                  VPA 79 P 5071   EUR


Gleichstrom-Kleinstmotor insbesondere für den Antrieb
zahnärztlicher Werkzeuge


Die Erfindung bezieht sich auf einen Gleichstrom-
Kleinstmotor, insbesondere für den Antrieb zahnärztlicher Werkzeuge, mit einem permanentmagnetischen
Stator, sowie mit Mitteln zur Drehzahländerung und
gegebenenfalls Drehrichtungsumkehr des Motors.

Bei Gleichstrom-Kleinstmotoren mit permanentmagnetischer Erregung ist es bekannt, die Drehzahl durch
Änderung der Ankerspannung zu ändern. In der zahnärztlichen Technik z.B., wo man solche Motoren zum
Antrieb von Bohr-, Schleif- oder Fräswerkzeugen einsetzt, werden solche Motoren in der Regel bei einer
Nennspannung von etwa 24 V Gleichspannung über einen
Drehzahlbereich von etwa 4000 bis 40 000 Upm betrieben.
Eine Drehzahländerung erzielt man von einem Fußschalter
aus über einen veränderbaren Widerstand.

Rp 5 Rl / 23.7.1979

- 2 -    VPA 79 P 5071 EUR

Zur Veränderung des oben erwähnten Drehzahlbereiches auf etwa 120 000 Upm nach oben bzw. auf etwa 800 bis 1000 Upm nach unten verwendete man bisher auf den Antriebsmotor abgestimmte Unter- oder Übersetzungsgetriebe. Solche Getriebe stellen an sich, und insbesondere bei so kleinen Abmessungen und relativ hohen Drehzahlen, wie sie bei den erwähnten zahnärztlichen Antriebsmotoren verlangt werden, besonders wartungsbedürftige Verschleißteile dar. Außerdem erfordern sie einen relativ großen Fertigungsaufwand. Wegen des bei solchen Kleinstmotoren und insbesondere bei solchen zum Antrieb zahnärztlicher Werkzeuge zur Verfügung stehenden, relativ geringen Raumes zur Unterbringung derartiger Unter- oder Übersetzungsgetriebe, werden an die Getriebeteile außerdem besonders hohe Anforderungen an Material und Einhaltung von Passungen gestellt. Ein weiterer Nachteil ist in dem häufigen Wechsel der Handstücke, die die Unter- bzw. Übersetzungsgetriebe beinhalten, und die auf die Antriebsmotoren aufgesteckt werden, zu sehen, der notwendig ist, wenn der Arzt während einer Patientenbehandlung mit unterschiedlichen Drehzahlbereichen zu arbeiten hat.

Aufgabe der Erfindung ist es, einen demgegenüber verbesserten und vereinfachten Gleichstrom-Kleinstmotor der eingangs genannten Gattung zu schaffen; insbesondere soll unter weitgehender Beibehaltung der Leistung und Beibehaltung der bisherigen Drehzahleinstellmöglichkeit (durch Änderung der Ankerspannung) die Drehzahl bzw. der Drehzahlbereich verändert werden können. Darüber hinaus ist es ein weiteres Ziel der Erfindung, mit relativ einfachem Aufwand gleichsam auch eine Drehrichtungsumkehr zu erreichen.

0023037

Die gestellte Aufgabe wird bei einem Gleichstrom-Kleinstmotor der eingangs genannten Gattung gemäß der Erfindung dadurch gelöst, daß der Stator wenigstens einen um eine im wesentlichen parallel zur Motorachse verlaufende Achse drehbar gelagerten Stab aus permanentmagnetischem Material enthält, und daß Verstellmittel zur Verdrehung des Stabes relativ zu den unmittelbar benachbarten Statorteilen vorhanden sind.

Durch Verdrehen des Stabes bzw. (wenn mehrere vorhanden) der Stäbe wird ein Gegenpolen (Umpolen) des Magnetflusses gegenüber dem Magnetfluß der unmittelbar benachbarten Statorteile erreicht. Im Bereich der Stäbe baut sich dabei ein Gegenfeld auf, das den Gesamtfluß schwächt. Diese Flußänderung wird nach der Beziehung $n \sim \frac{1}{\phi}$ für eine Drehzahländerung bzw. Drehzahlbereichsänderung ausgenutzt.

Um eine Änderung der Drehzahl von einem Maximal- auf einen Minimalwert (von Schnellauf auf Langsamlauf), und umgekehrt, zu bekommen, ist eine Verdrehung des Stabes (bzw. der Stäbe) um 180° bzw. 45°, je nach Anzahl und Anordnung der vorgesehenen Stäbe, erforderlich. Vorteilhafterweise bestehen die Magnetflußänderungsstäbe aus einem Material der Seltenerden, vorzugsweise aus Kobalt/Samarium (z.B. $CoSm_5$). Die Stäbe können in einer vorteilhaften Ausführungsform jeweils an der rechten bzw. linken Seite einer ortsfesten Stator-Magnetschale drehbar angeordnet sein. Zur Lagerung der Magnetflußänderungsstäbe können vorteilhafterweise ein im wesentlichen zylindrisches Rückschlußgehäuse sowie zwischen Rotor und ortsfestem Stator angeordnete Polschuhelemente dienen. Eine Verstellung der Stäbe kann vorteilhafterweise durch ein innenver-

- 4 -        VPA 79 P 5071  EUR

zahntes Zahnrad erfolgen, das mit an den einen Enden
der Stäbe angeordneten Zahnrädern kämmt.

Eine kontinuierliche Drehzahländerung ist möglich,
indem die zu einer Statorschale gehörenden Magnetflußänderungsstäbe gegensinnig paarweise gedreht werden.

Nach einer weiteren vorteilhaften Ausgestaltung der
Erfindung besteht der Stator aus einer Vielzahl von
verstellbaren Magnetflußänderungsstäben, die jeweils durch Zahnräder miteinander gekuppelt sind.
Die Verzahnung ist vorteilhafterweise so, daß bei
Betätigen eines Umschaltringes die Stäbe paarweise
zueinander gedreht werden. Sind die Magnetflußänderungsstäbe um 180$^{\circ}$ drehbar gelagert, so läßt sich
damit nicht nur eine Drehzahländerung, sondern auch
eine Drehrichtungsumschaltung von Rechts- auf Linkslauf erzielen.

Zwei Ausführungsbeispiele der Erfindung werden nachfolgend anhand der Zeichnung näher erläutert. Es
zeigen:

Fig. 1 den Aufbau des erfindungsgemäßen Motors in
einer schaubildlichen Darstellung,

Fig. 2 einen Querschnitt durch den Motor nach Fig.1,

Fig. 3 einen Längsschnitt entlang der Linie III-III
in Fig. 2,

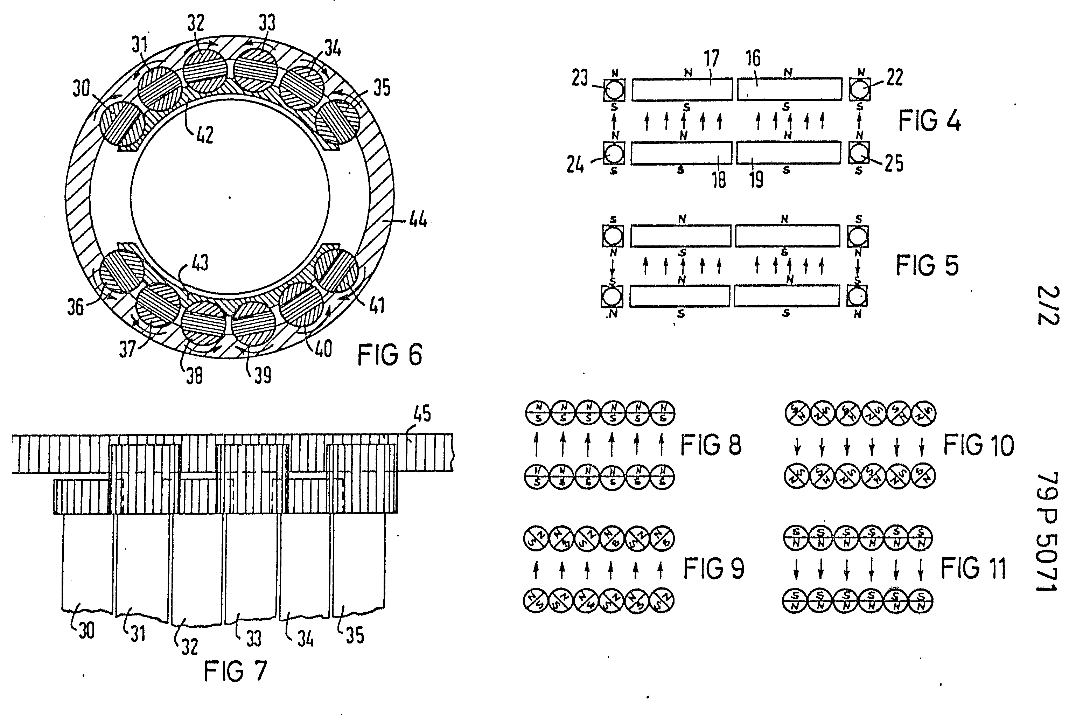

Fig. 4 und 5 eine Prinzipdarstellung zur Erläuterung des Magnetflusses,

Fig. 6 eine andere Ausführungsform eines Motors
im Querschnitt entlang der Linie VI-VI in
Fig. 1,

Fig. 7 einen Ausschnitt aus einer Getriebeverbindung in einer Draufsicht,

Fig. 8 bis 11 Prinzipdarstellungen zur Erläuterung des Magnetflusses.

Die Fig. 1 zeigt in einer schaubildlichen Explosionsdarstellung den Aufbau des erfindungsgemäßen Gleichstrom-Kleinstmotors. Mit 1 ist ein in bekannter Weise aufgebauter Anker (Rotor) bezeichnet, der in montiertem Zustand in einem mit 2 bezeichneten Gehäuse gelagert ist. Das Motorgehäuse 2 enthält ein im wesentlichen zylindrisches Rückschlußgehäuse 3 in dem zwei ortsfeste Statorhalbschalen 4, 5 aus permanentmagnetischem Material befestigt sind. Mit 6 und 7 sind ferner zwei Polschuhhalbschalen bezeichnet, die, wie aus der Fig. 2 näher hervorgeht, zur Lagerung von vier stabförmigen, im Querschnitt runden Magnetflußänderungsstäben 8 bis 11 dienen, die zusammen mit den ortsfesten Statorschalen 4, 5 den magnetischen Teil des Stators bilden. Die Magnetflußänderungsstäbe 8 bis 11 weisen an ihren einen Enden jeweils eine Außenverzahnung 12 auf, die mit einer Innenverzahnung 13 eines Betätigungsringes 14 zusammenwirkt, der in montiertem Zustand auf einem Absatz 15 des Motorgehäuses 2 drehbar gelagert ist. Der Betätigungsring 14 ist dabei so am Motorgehäuse angeordnet, daß er entweder direkt oder mittels eines entsprechend ausgebildeten Stellhebels von Hand verdreht werden kann.

Die Fig. 2, die einen Querschnitt entlang der Linie II-II in Fig. 1 zeigt, läßt erkennen, daß die Halbschalen 4 und 5 des Stators aus jeweils zwei ortsfesten Magnetstäben 16, 17 und 18, 19 gebildet werden, die im Motorgehäuse einerseits zwischen dem Rückschlußgehäuse 3 und den Polschuhhalbschalen 6, 7 eingebettet sind. Die Flußänderungsstäbe 8 bis 11 sind an den umfangsseitigen Enden der Statorhalbschalen 4 und 5 jeweils um eine parallel zur Motorachse 20 verlaufende Lagerachse 21 drehbar gelagert und weisen Magnetstäbe 22 bis 25 auf, die in mit entsprechenden Schlitzen versehenen Rundstäben 26 aus weichmagnetischem Material oder zwischen zwei Stäben, die im Querschnitt einen Kreisabschnitt (Segment) bilden, eingebettet sind. Zur Lagerung der Stäbe 26 dienen einerseits das Rückschlußgehäuse 3 und andererseits die Polschuhhalbschalen 6 und 7, die längs des Motors entsprechend geformt sind. Die drehbaren Magnetstäbe 22 bis 25 sind gleich dick ausgebildet wie die ortsfesten Magnetstäbe 16 bis 19 (ca. 1 mm stark). Zusammen bilden die Stäbe pro Halbschale einen Winkel von 120°.

Die Magnetstäbe 22 bis 25 sind in den Stäben 26 ohne direkte Berührung der die Außenverzahnung 12 aufnehmenden Zahnräder 27, die aus einem nichtmagnetischen Material bestehen, befestigt (Fig. 3). Zu diesem Zweck, und auch zur Vermeidung eines magnetischen Kurzschlusses, haben die Zahnräder 27, unter Bildung einer Luftkammer 28, ausschließlich mit den Stäben 26 direkte Verbindung.

Die Fig. 4 und 5 zeigen in einer schematischen Darstellung die Anordnung der festen und verstellbaren Magnetstäbe und lassen die Flußrichtung erkennen. In der Stellung nach Fig. 4, die der Anordnung nach Fig. 2 entspricht, sind die N-/S-Pole der festen und der verstellbaren Magnete gleich ausgerichtet. In dieser Stellung ist der Magnetfluß am stärksten und entsprechend der Beziehung $n \sim \frac{1}{\emptyset}$ die Motordrehzahl am niedrigsten (Langsamlauf).

Wird der Betätigungsring 14 (Fig. 1) in Richtung des Pfeiles 29 (Fig. 2) gedreht, so werden durch die gemeinsame Koppelung der Flußänderungsstäbe 8 bis 11 über die Außenverzahnung 12 und die Innenverzahnung 13 des Betätigungsringes die Stäbe gleichsinnig gedreht. Nach Drehung der Stäbe um 180° stehen die N-/S-Pole entgegengesetzt zu den Polen der festen Magnetstäbe 16, 17 bzw. 18, 19, wie dies in Fig. 5 angezeigt ist. In dieser Stellung tritt, da sich das Magnetfeld einerseits zwischen den beweglichen Magnetstäben 22, 25 und 23, 24 und dem jeweils benachbarten Teil der festen Magnetstäbe 16, 19 und 17, 18, aufhebt, eine Schwächung des Magnetflusses ein. Durch das Wenden der Flußänderungsstäbe 8 bis 11 und damit der Magnetstäbe 22 bis 25 baut sich ein Gegenfeld auf, das den Gesamtfluß durch den Anker schwächt. Infolge des somit geringeren Flusses wird die Drehzahl nach der Beziehung $n \sim \frac{1}{\emptyset}$ erhöht (Schnellauf).

Eine maximale Feldänderung und damit Drehzahländerung wird bei dieser Ausführung also durch Drehen der Magnetstäbe um 180° erreicht. Zwischenstellungen sind bei dem gezeigten Aufbau nicht vorteilhaft, da durch gleichsinniges Verdrehen der Magnetstäbe eine Feldverzerrung entsteht. Eine kontinuierliche Drehzahländerung ist aber möglich, durch Verwendung eines Zwischenrades am einen der beiden Stäbe einer jeden Halbschale, wodurch ein paarweises gegensinniges Drehen der Magnetstäbe erzielt wird, wie dies auch bei dem nachfolgend beschriebenen Ausführungsbeispiel der Fall ist.

Eine besonders vorteilhafte Lösung,mit der nicht nur eine Drehzahländerung,sondern darüberhinaus auch eine Drehrichtungsumkehr des Motors erreicht werden kann, wird anhand der Figuren 6 bis 11 erläutert.

Im Gegensatz zu der Konstruktion nach den Figuren 1 bis 5 werden die beiden Statorhalbschalen bei dem Ausführungsbeispiel nach Fig. 6, die den Motor im Querschnitt entlang der Schnittlinie II-II in Fig. 1 zeigt, aus sechs drehbaren Magnetflußänderungsstäben 30 bis 35 für die eine,und sechs weiteren Stäben 36 bis 41 für die andere Halbschale gebildet. Die Magnetflußstäbe 30 bis 41 sind wie die Stäbe 8 bis 11 in dem zuvor erläuterten Ausführungsbeispiel aufgebaut, d.h. es sind auch hier schmale dünne Stäbchen (von etwa 1 mm Stärke und 2 - 3 mm Länge) aus Kobald-Samarium in weichmagnetische Rund- oder Halbrundstäbe eingebettet, die einerseits in entsprechenden Polschuhhalbschalen 42, 43 und andererseits in einem zylindrischen Rückschlußgehäuse 44 gelagert sind. Zur Verstellung der Magnetflußänderungsstäbe 30 bis 41 sind diese paarweise direkt miteinander verzahnt, und die jeweils gleichsinnig sich bewegenden Stäbe über ein Betätigungszahnrad miteinander verzahnt. In Fig. 7 ist dies in einer Draufsicht auf die Verzahnung veranschaulicht. Danach sind bei der oberen Halbschale die Stäbe 30 und 31, 32 und 33 und 34 und 35 paarweise direkt miteinander verzahnt; darüberhinaus sind die Stäbe 31, 33 und 35 noch mit einem Betätigungszahnrad 45 verzahnt, wozu die Zahnräder dieser Stäbe (31, 33 und 35) etwas länger ausgebildet sind als die der anderen Stäbe. Entsprechendes gilt für die untere Halbschale. Die Anordnung erlaubt somit ein paarweises gegensinniges Verdrehen der Magnetflußänderungsstäbe (siehe Pfeile in Fig. 6). Das Betätigungszahnrad 45 ist entsprechend dem Betätigungsring 14 aufgebaut und kann von außen entweder direkt oder mittels eines Schalthebels gedreht werden.

Die Fig. 8 bis 10 zeigen die Magnetflußstäbe in verschiedenen Stellungen. In Fig. 8 sind die Stäbe in einer Grundstellung gezeichnet, die einem Langsamlauf in der einen Drehrichtung z.B. im Uhrzeigersinn entspricht. Durch Drehen des Betätigungszahnrades 45 werden die Stäbe paarweise zueinander geschwenkt, bis die Stellung nach Fig. 9 erreicht wird. In dieser Stellung ist eine Feldschwächung (markiert durch kürzere Pfeile) vorhanden, die - nach der Beziehung $n \sim \frac{1}{\emptyset}$ - einem Schnellauf des Motors im Uhrzeigersinn entspricht. Durch Weiterdrehen des Betätigungszahnrades 45 wird schließlich eine Stellung erreicht, bei der das Feld durch den Anker gleich Null ist. Diese Stellung, die - ausgehend von der Grundstellung in Fig. 8 mit dem Drehwinkel $0°$ - einem Drehwinkel von $90°$ entspricht, sollte ebenso wie der unmittelbar benachbarte Winkelbereich (von ca. $70°$ bis $110°$) vermieden werden, was durch die Anordnung geeigneter Mittel, die z.B. ein Rasten oder Verbleiben des Betätigungszahnrades in den diesen Stellungen entsprechenden Zahnradstellungen verhindern und ein Überspringen dieser Stellungen gewährleisten, geschehen kann. Nach Durchgang durch die obengenannte Nulllage mit dem Drehwinkel $90°$, wendet das Feld und es wird schließlich die in Fig. 10 gezeigte Stellung erreicht, die einer Feldschwächung (markiert wieder durch kürzere Pfeile), jetzt aber in entgegengesetzter Richtung, zur Folge hat. Diese Stellung entspricht einem Schnellauf des Motors in entgegengesetzter Drehrichtung, also im Gegen-Uhrzeigersinn. Durch weiteres Drehen des Betätigungszahnrades 45 wird schließlich die in Fig. 11 gezeigte Stellung erreicht, in der der maximale Fluß, wie in der Stellung nach Fig. 8, jedoch mit umgekehrter Magnetflußrichtung, vorhanden ist. In dieser Stellung läuft der Motor somit im Langsamlauf, jedoch im anderen Drehsinn, also im Gegen-Uhrzeigersinn.

Aus dem Vorstehenden ist erkennbar, daß durch das Drehen der Magnetflußstäbe nicht nur eine Drehzahländerung sondern auch eine Drehrichtungsumschaltung erzielbar ist.

Patentansprüche

1. Gleichstrom-Kleinstmotor, insbesondere für den Antrieb zahnärztlicher Werkzeuge, mit einem permanentmagnetischen Stator sowie mit Mitteln zur Drehzahländerung und gegebenenfalls Drehrichtungsumkehr des Motors, d a d u r c h   g e k e n n z e i c h n e t , daß der Stator (4, 5, 22 - 25) wenigstens einen um eine im wesentlichen parallel zur Motorachse (20) verlaufende Achse (21) drehbar gelagerten, den Magnetfluß bei Drehung ändernden Stab (22 - 25) aus permanentmagnetischem Material enthält, und daß Verstellmittel (14, 15) zur Verdrehung des Stabes (22 - 25) relativ zu den unmittelbar benachbarten, ortsfesten Statorteilen (16 - 19) vorhanden sind.

2. Gleichstrom-Kleinstmotor nach Anspruch 1,   d a d u r c h   g e k e n n z e i c h n e t ,   daß zur Lagerung des Magnetflußänderungsstabes (22 - 25) ein im wesentlichen zylindrisches Rückschlußgehäuse (3) und zwischen Rotor (1) und Stator angeordnete Polschuhelemente (6, 7) vorgesehen sind.

3. Gleichstrom-Kleinstmotor nach Anspruch 1 oder 2, d a d u r c h   g e k e n n z e i c h n e t ,   daß der Magnetflußänderungsstab (22 - 25) in einem Körper (26) aus weichmagnetischem Material und zylindrischer Mantelfläche eingebettet ist.

4. Gleichstrom-Kleinstmotor nach einem der Ansprüche 1 bis 3, d a d u r c h   g e k e n n z e i c h n e t , daß der Stator (4, 5, 22 - 25) in an sich bekannter Weise aus zwei ortsfesten Halbschalen (4, 5) gebildet ist, und daß an den beiden umfangsseitigen Enden der Halbschalen (4, 5) je ein drehbarer Magnetflußänderungsstab (22 - 25) angeordnet ist, und die Magnetflußänderungsstäbe (22 - 25) über ein Getriebe (12, 13, 45) miteinander verbunden sind, derart, daß eine gemeinsame Drehung der Stäbe gegeben ist.

5. Gleichstrom-Kleinstmotor nach Anspruch 4, d a d u r c h   g e k e n n z e i c h n e t , daß die Statorhalbschalen (4, 5) aus mehreren im Querschnitt im wesentlichen Kreisringsektoren bildenden Längsstäben (16 - 19) aus einem Material der Seltenen Erden, vorzugsweise aus Kobald-Samarium gebildet werden, und die Magnetflußänderungsstäbe (22 - 25) aus dem gleichen Material bestehen.

6. Gleichstrom-Kleinstmotor nach Anspruch 5, d a d u r c h   g e k e n n z e i c h n e t , daß die ortsfesten Längsstäbe (16 - 19) der Statorhalbschalen (4, 5) einerseits zwischen dem zylindrischen Rückschlußgehäuse (3) und andererseits zwischen zwei Polschuhhalbschalen (6, 7) eingebettet sind.

7. Gleichstrom-Kleinstmotor nach einem der Ansprüche 1 bis 6, d a d u r c h   g e k e n n z e i c h n e t , daß die Magnetflußänderungsstäbe (22 - 25) an ihren einen Enden eine Verzahnung (12) aufweisen, die mit einem für alle Stäbe gemeinsamen Zahnrad (14, 45) zur gemeinsamen Verdrehung der Stäbe kämmt.

8. Gleichstrom-Kleinstmotor nach Anspruch 7, d a d u r c h   g e k e n n z e i c h n e t , daß die Magnetflußänderungsstäbe (22 - 25) ein Zahnrad mit Außenverzahnung (12) haben und zur gemeinsamen Verstellung ein Zahnrad (14) mit Innenverzahnung (13) vorgesehen ist, dessen äußere Mantelfläche zur manuellen Verstellung des Zahnrades (14) ausgebildet ist.

0023037

9. Gleichstrom-Kleinstmotor nach Anspruch 1,  d a -
d u r c h   g e k e n n z e i c h n e t ,   daß der
Stator aus einer Vielzahl von gleichartigen drehbar
angeordneten Magnetflußänderungsstäben (30 - 41) gebildet ist, und die Stäbe paarweise (30, 31; 32, 33)
gegeneinander verdrehbar angeordnet sind.

10. Gleichstrom-Kleinstmotor nach Anspruch 9,  d a -
d u r c h   g e k e n n z e i c h n e t ,   daß jeweils eine einem ganzzahligen Vielfachen von zwei entsprechende Anzahl von Magnetstäben (30 - 35; 36 - 41),
vorzugsweise sechs, eine Statorhalbschale bilden.

11. Gleichstrom-Kleinstmotor nach einem der Ansprüche
9 oder 10,  d a d u r c h   g e k e n n z e i c h -
n e t ,   daß die Magnetflußänderungsstäbe (30 - 41)
mit einem Getriebe (45) gekuppelt sind, welches eine
Drehung der Stäbe um 180$^{\text{o}}$ ermöglicht.

FIG 1

FIG 2

FIG 3

α 120°

FIG 4

FIG 5

FIG 10

FIG 11

FIG 8

FIG 9

FIG 6

FIG 7

))) Europäisches
Patentamt

**EUROPÄISCHER RECHERCHENBERICHT**

| Kategorie | **EINSCHLÄGIGE DOKUMENTE** Kennzeichnung des Dokuments mit Angabe, soweit erforderlich, der maßgeblichen Teile | betrifft Anspruch | KLASSIFIKATION DER ANMELDUNG (Int Cl.³) |
|---|---|---|---|
| X | US - A - 3 836 802 (GEN.ELECTRIC CO.) <br><br> * Spalte 2, Zeile 29 bis Spalte 3, Zeile 15 * <br><br> -- | 1,4,5, 7,11 | H 02 K 23/16 |
| A | US - A - 4 110 649 (ELECTRIC VEHICLE CO. OF AMERICA) <br><br> * Spalte 2, Zeilen 43-48; Spalte 3, Zeilen 3-13 * <br><br> -- | | |
| A | FR - A - 395 924 (M.M. FOUQUE) <br><br> * Seite 2, linke Spalte, Zeile 24 bis rechte Spalte, Zeile 38 * <br><br> -- | | **RECHERCHIERTE SACHGEBIETE (Int. Cl.³)** <br><br> H 02 K 23/16 <br> 23/44 <br> 23/48 <br> 23/04 |
| A | US - A - 2 658 177 (J.M. PESTARINI) <br><br> * Spalte 5, Zeilen 8-26 * <br><br> -- | | |
| AEP | EP - A - 0 008 049 (SIEMENS) <br><br> * Seite 9, Zeile 29 bis Seite 10, Zeile 26 * <br><br> ---- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-09-1980 | TANGOCCI |

EPA form 1503.1 06.78